# EUROPEAN PATENT SPECIFICATION

(11) **EP 3 540 838 B1**
(45) Date of publication and mention of the grant of the patent: **12.10.2022**
(21) Application number: 19162712.4
(22) Date of filing: 14.03.2019
(51) Int. Cl.: H01M 8/0217, H01M 8/1246, H01M 4/86, H01M 4/90

(54) **SOLID OXIDE FUEL CELL**
FESTOXIDBRENNSTOFFZELLE
CELLULE DE PILE À COMBUSTIBLE D'OXYDE SOLIDE

(30) Priority: 16.03.2018 JP 2018050047
(43) Date of publication of application: 18.09.2019
(73) Proprietor: Kabushiki Kaisha Toyota Chuo Kenkyusho, Nagakute-shi, Aichi 480-1192 (JP)
(72) Inventor: FUJITA, Satoru, Nagakute-shi, Aichi 480-1192 (JP)
(74) Representative: Kramer Barske Schmidtchen Patentanwälte PartG mbB

(56) References cited:
- JP-A- 2017 073 321
- US-B2- 7 709 124
- ALESSANDRO MANCINI ET AL: "Chemical compatibility study of melilite-type gallate solid electrolyte with different cathode materials", JOURNAL OF SOLID STATE CHEMISTRY, vol. 213, 12 March 2014 (2014-03-12), pages 287-292, XP055604977, US ISSN: 0022-4596, DOI: 10.1016/j.jssc.2014.03.006

## Description

### FIELD OF THE INVENTION

The present invention relates to a solid oxide fuel cell, and more particularly to a solid oxide fuel cell using a melilite electrolyte.

### BACKGROUND OF THE INVENTION

A fuel cell is one of means effective for solving environmental problems and energy problems. In Particular, a solid oxide fuel cell (SOFC) has the advantages of (1) having high power generation efficiency, (2) being compatible with various types of fuels, (3) having wide adaptability ranging from a small distributed power source to a large scale system substituting thermal power plants, and (4) not requiring a Pt catalyst.

The reduction of an operating temperature (current operating temperature: 750°C), however, is the key to the promotion of an SOFC. By reducing a temperature (for example, to 600°C), (1) improvement in durability of a cell (chemical stability), (2) use of a less-expensive housing (less-expensive stainless steel), and (3) reduction of start and stop time can be attained.

A conventional SOFC is operated at 750°C, and yttria-stabilized zirconia (YSZ) is used as an electrolyte. The crystal structure of YSZ is a fluorite-type structure and is a crystal structure of high symmetry. An oxygen ion in YSZ therefore moves in three-dimensional directions by vacancy diffusion. YSZ, however, cannot attain a conductivity of 0.01 S/cm or more unless the temperature is 700°C or more.

In contrast, a solid electrolyte including an oxide having a melilite structure (melilite electrolyte) has a crystal structure of low symmetry and shows a high ion conductivity in a specific direction. For this reason, a melilite electrolyte is studied as an electrolyte for an SOFC operating at a low temperature.

As the melilite electrolytes, known examples include
(1) LaSrGa₃O₇ (Non-patent literature 1),
(2) La_{1.54}Sr_{0.46}Ga₃O_{7.27} (Non-patent literature 2),
(3) La_{1.64}Ca_{0.36}Ga₃O_{7.32} (Non-patent literature 3),
(4) La_{1.5}Ca_{0.5}Ga₃O_{7.25} (Non-patent literature 4),
(5) (A₁₊ₓB₁₋ₓ)GaGa₂O_{7+x/2} (here, 0 ≤ x ≤ 0.5; A = La, Nd; B = Ca, Sr) (Non-patent literature 5), and
(6) La_{1.54}Sr_{0.46}Ga_{2.87}Mg_{0.13}O_{7.21} (Patent literature 1) .

The conductivities at 600°C of most of the melilite electrolyte exceed the conductivity of YSZ. In particular, the conductivities at 600°C of La_{1.54}Sr_{0.46}Ga₃O_{7.27} and La_{1.54}Sr_{0.46}Ga_{2.87}Mg_{0.13}O_{7.21} exceed 0.01 S/cm. In order to lower the operating temperature of an SOFC, however, it is desired to further improve a conductivity at a low temperature.

Further, in the solid oxide fuel cell using YSZ as an electrolyte, lantern strontium cobalt ferrite (La_{0.6}Sr_{0.4}Co_{0.2}Fe_{0.8}O₃, LSCF) is usually used for a cathode. In this case, when LSCF and YSZ react with each other, a high resistance reaction layer (SrZrO₃) is formed and hence, it is indispensable to insert a reaction preventing layer (Ga-CeO₂) between the electrolyte and the cathode. However, the insertion of the reaction preventing layer brings about an increase of a manufacturing cost.

### [Citation List]

### [Patent Literature]

[Patent literature 1] JP 2017-073321 A

### [Non-patent literature]

[Non-patent literature 1] Adv. Funct. Mater., 2010, 20, 3874-3880
[Non-patent literature 2] Nat. Mater., 2008, 7, 498
[Non-patent literature 3] Agew. Chem. Int. Ed., 2010, 49, 2362-2366
[Non-patent literature 4] J. Mater. Chem. A, 2015, 3, 3091-3096
[Non-patent literature 5] J. Am. Chem. Soc., 2011, 133, 15200-15211

US 7 709 124 B2 discloses a direct electrochemical oxidation of hydrocarbons in solid oxide fuel cells, to generate greater power densities at lower temperatures without carbon deposition.

JP 2017 073321 A discloses an electrolyte with melilite crystal structure.

ALESSANDRO MANCINI ET AL: "Chemical compatibility study of melilite-type gallate solid electrolyte with different cathode materials", JOURNAL OF SOLID STATE CHEMISTRY, vol. 213, 12 March 2014, pages 287-292, XP055604977, relates to melilite-type gallate solid electrolytes.

### SUMMARY OF THE INVENTION

It is an object of the present invention to provide a solid oxide fuel cell which can be operated even at 700°C or below.

It is another object of the present invention to provide a solid oxide fuel cell which does not require insertion of a reaction preventing layer between an electrolyte and a cathode.

To achieve the above-mentioned objects, a solid oxide fuel cell according to claim 1 is provided. Further developments of the invention are recited in the dependent claims.

In a melilite electrolyte containing La and a trivalent metal element (X), a conductivity at a low temperature improves by substituting a part of La with an element M and optimizing an La/M ratio. This is presumably because the quantity of oxygen ions (O(4) ions) acting as a carrier in the oxygen ions increases in a crystal structure.

Further, by substituting for a Mg ion in a Ga site, the tendency of ionic bonding in a crystal structure increases and results in higher mobility of oxygen ions.

By applying such a melilite electrolyte to an electrolyte membrane of a solid oxide fuel cell, an operation temperature of the fuel cell can be lowered. Further, the melilite electrolyte does not contain Zr and hence, there is no possibility that the melilite electrolyte reacts with LSCF and forms a high-resistance reaction layer. Accordingly, it is unnecessary to interpose a reaction preventing layer between the cathode and the electrolyte membrane.

### BRIEF DESCRIPTION OF THE DRAWINGS

FIG. 1 is a schematic view of a crystal structure of a melilite electrolyte containing Sr as an element M and Ga as an element X;
FIG. 2 is oxygen ion conductivities of a melilite electrolyte (La_{1.54}Sr_{0.46}Ga₃O_{7.27}) and a YSZ;
FIG. 3 is a power generation characteristic (an I-V characteristic) of an SOFC using a melilite electrolyte (La_{1.54}Sr_{0.46}Ga₃O_{7.27}) and an SOFC using a YSZ;
FIG. 4 is SEM images of a bonding interface between a melilite electrolyte (La_{1.54}Sr_{0.46}Ga_{2.98}Mg_{0.02}O_{7.26}) and a cathode (La_{0.6}Sr_{0.4}Co_{0.2}Fe_{0.8}O₃), and an element analysis result of the bonding interface; and
FIG. 5 is SEM images of a bonding interface between an electrolyte (Y-ZrO₂) and a reaction preventing layer (Ga-CeO₂) and a bonding interface between the reaction preventing layer (Ga-CeO₂) and a cathode (La_{0.6}Sr_{0.4}Co_{0.2}Fe_{0.8}O₃), and an element analysis result of the bonding interface.

### DETAILED DESCRIPTION OF PREFERRED EMBODIMENT

Hereinafter, one embodiment of the present invention is described in detail.

### [1. Melilite electrolyte]

In a solid oxide fuel cell according to the present invention, a melilite electrolyte is used for an electrolyte membrane and an anode. In the present invention, "melilite electrolyte" means a solid electrolyte having a melilite structure and having a composition expressed by a following formula (1).

La_{2-y}M_{y}X_{3-z}Mg_{z}O_{7+α} ... (1)

wherein
M is an alkaline earth metal element other than Mg,
X is a trivalent metal element,
0 < y < 2, 0 ≤ z < 3, and
α is a value retaining electrical neutrality.

### [1.1. Melilite structure]

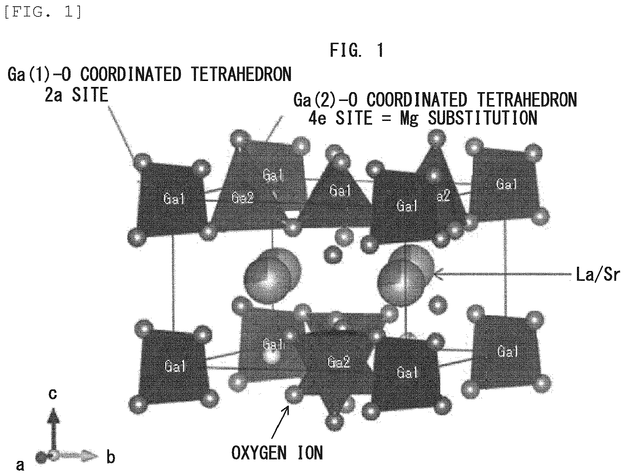

FIG. 1 shows a schematic view of a crystal structure of a melilite electrolyte containing Sr as an element M and Ga as an element X. A melilite electrolyte has: a Ga-0 layer (X-O layer) formed by two-dimensionally linking Ga-0 coordinated tetrahedra (X-O coordinated tetrahedra); and La and Sr (element M) inserted between the Ga-0 layers. A Ga atom is located in the center of the Ga-0 coordinated tetrahedron and an oxygen atom is located at an apex of the Ga-0 coordinated tetrahedron. In the melilite electrolyte shown in FIG. 1, oxygen ions are likely to diffuse along a Ga-0 layer. As a result, an ion conductivity in a direction parallel to a Ga-0 layer is larger than that in a vertical direction.

A Ga-0 layer has a structure in which two different types of Ga-0 coordinated tetrahedra share an apex. A Ga(1) links with four O(3)s and all the oxygen ions at the apexes are shared with a Ga(2)-O coordinated tetrahedron. Further, a Ga(2)-O coordinated tetrahedron links with one O(1), one O(2), and two O(3)s. The O(3)s at the apexes are shred with a Ga(1)-O coordinated tetrahedron and the O(1) at the apexes are shared between Ga(2)-O coordinated tetrahedra. The 0(2) at the apex is not shared with a Ga(1)-O coordinated tetrahedron and exists in the state of a non-bridging oxygen.

An O(4) is an interstitial oxygen existing in a Ga-0 layer and acts as an ion conduction source. An 0(4) quantity depends on an La/Sr ratio. That is, as an La/Sr ratio increases, an O(4) quantity increases and an ion conductivity also increases. The same is applied to an element M other than the Sr and, as a trivalent La quantity increases in comparison with a divalent element M, an oxygen (0(4)) quantity in a lattice increases. The reason why an La/Sr ratio is changeable is that the ion radii of La and Sr are 1.13 Å (0.113 nm) and 1.21 Å (0.121 nm) respectively, the electronegativities of them are 1.03 and 0.99 respectively, and thus the values of the ion radii and the electronegativities are nearly identical.

The center of a Ga(1)-O coordinated tetrahedron is a 2a site and the 2a site is occupied only by Ga(1) (element X(1)). That is, Ga(1) is not substituted with Mg.

In contrast, the center of a Ga(2)-O coordinated tetrahedron is a 4e site and the 4e site is occupied by Ga(2) (element X(2)) and Mg. Ga(2) and Mg can occupy the 4e site at an arbitrary ratio.

An interlayer site is an La site and the La site is occupied by La and Sr (element M). La and Sr (element M) can occupy the La site at an arbitrary ratio.

### [1.2. Element M]

An element M represents an alkaline earth metal element (Be, Ca, Sr, Ba, Ra) other than Mg. A melilite electrolyte may contain one kind of element M, or may contain two or more kinds of elements M.

A melilite electrolyte containing an element M shows a high ion conductivity. This is because an O(4) quantity increases by substituting a part of La with an element M.

In particular, a melilite electrolyte containing Sr as the element M shows a high ion conductivity. This is because the ion radius and electronegativity of Sr are close to those of La and an La/M ratio can be optimized easily.

Meanwhile, Mg is an alkaline earth metal element but never occupies an La site. This is thought to be related with ion radius and electronegativity.

### [1.3. Element X]

An element X represents a trivalent metal element. As an element X for example, Ga, Al, In, or the like is named. A melilite electrolyte may contain one kind of element X, or may contain two or more kinds of elements X.

A melilite electrolyte containing an element X shows a high ion conductivity. This is presumably because an oxygen ion (O(4) ion) acting as a carrier is likely to move in a lattice in a melilite electrolyte containing an element X.

In particular, a melilite electrolyte containing Ga and/or Al as an element X shows a high ion conductivity. Meanwhile, the ionic bond of Al-O is stronger than that of Ga-0 and hence an Al-contained melilite may show a higher ion conductivity than a Ga-contained melilite.

### [1.4. y]

y represents the proportion of an element M occupying an La site. y can take a value in the range of 0 < y < 2 as long as a melilite crystal structure can be retained.

A ratio of La to an element M (La/M ratio) influences the ion conductivity of a melilite electrolyte. In general, as an La/M ratio increases, an ion conductivity increases. In order to obtain an ion conductivity of 0.01 S/cm or more at 600°C, an La/M ratio (= (2 - y)/y) is desirably 1.9 or more. An La/M ratio is more desirably 2.3 or more and yet more desirably 2.5 or more.

In contrast, when an La/M ratio is excessive, an ion conductivity rather decreases. Consequently, an La/M ratio is desirably 4.0 or less. An La/M ratio is more desirably 3.5 or less.

### [1.5. z]

z represents a quantity of doped Mg. z can take a value in the range of 0 ≤ z < 3 as long as a melilite structure can be retained.

The melilite electrolyte expressed by the formula (1) exhibits a high ion conductivity even when the melilite electrolyte does not contain Mg. That is, z may be set to 0 (z = 0). However, in general, as an Mg quantity increases, an oxygen ion is more likely to move and an ion conductivity increases. In order to attain such an effect, z is desirably more than zero. z is more desirably 0.02 or more and yet more desirably 0.03 or more.

The upper limit of a doped Mg quantity depends on an La/M ratio. In general, as an La/M ratio increases, the quantity of Mg that can be doped decreases. The excessively added Mg disperses as MgO in a melilite electrolyte and causes an ion conductivity to lower. Consequently, z is desirably 0.20 or less. Z is more desirably 0.15 or less.

### [1.6. α]

α represents a value retaining electrical neutrality of a melilite electrolyte. α is almost determined by the proportion of cations contained in a melilite electrolyte as long as material synthesis is not carried out under an extreme reducing atmosphere.

α is represented formally by (1-y-z)/2. Actually, however, α may vary somewhat from a theoretical value because of the formation of an oxygen vacancy and the like.

### [2. Manufacturing method of melilite electrolyte]

The melilite electrolyte according to the present invention can be manufactured by
(a) blending raw materials so that the quantities of metal elements may take a predetermined ratio,
(b) generating an intended crystal phase by subjecting mixed powder to solid-phase reaction (calcination),
(c) molding calcined powder, and
(d) sintering a molded body under an oxidizing atmosphere.

The conditions at the respective processes are not particularly limited and desirably optimum conditions are selected in accordance with the composition of a melilite electrolyte.

### [3. Solid oxide fuel cell]

The solid oxide fuel cell (SOFC) according to the present invention includes:
an electrolyte membrane;
an anode formed on one surface of the electrolyte membrane; and
a cathode formed on the other surface of the electrolyte membrane.

### [3.1. Electrolyte membrane]

The electrolyte membrane is composed of a solid electrolyte (melilite electrolyte (A)) having the melilite structure and having a composition expressed by a following formula (1). The detailed configuration of the melilite electrolyte (A) has been described above and hence, the description of the melilite electrolyte (A) is omitted.

La_{2-y}M_{y}X_{3-z}Mg_{z}O_{7+α} ... (1)

wherein
M is an alkaline earth metal element other than Mg,
X is a trivalent metal element,
0 < y < 2, 0 ≤ z < 3, and
α is a value retaining electrical neutrality.

### [3.2. Anode]

In the present invention, the anode is composed of a composite body (Ni-melilite cermet) containing Ni and a melilite electrolyte (B). The melilite electrolyte (B) which forms the anode may be a melilite electrolyte having the same composition as a melilite electrolyte (A) forming an electrolyte membrane or a melilite electrolyte having a composition different from the melilite electrolyte (A).

However, when the difference in thermal expansion coefficient between the electrolyte membrane and the anode is excessively increased, the electrolyte membrane or the anode is easily broken when a heat cycle is exerted to the electrolyte membrane or the anode. Accordingly, the difference in thermal expansion coefficient between the melilite electrolyte (A) and the melilite electrolyte (B) is preferably 10% or less.

Other properties of the melilite electrolyte (B) are substantially equal to corresponding properties of the melilite electrolyte (A) and hence, the description of other properties is omitted.

An amount of Ni contained in Ni-melilite cermet is not particularly limited, and an optimum amount can be selected depending on a purpose. An electrochemical reaction occurs on an Ni/melilite interface (three-phase interface). A ratio between Ni and melilite (volume ratio) is preferably set to 35 : 65 to 65 : 35, and is more preferably set to 50 : 50.

### [3.3. Cathode]

In the present invention, the cathode is composed of oxide (lantern strontium cobalt ferrite, LSCF) having a composition expressed by a following formula (2). The LSCF is particularly preferable as a material for the cathode because;
(a) the LSCF is excellent as a mixed ion-electron conductor,
(b) the LSCF is a substance which is relatively chemically stable under a high temperature,
(c) the LSCF has favorable porosity (gas diffusion property),
(d) the LSCF is a high-active catalyst where oxygen dissociation occurs easily, and
(e) the LSCF has favorable consistency in thermal expansion coefficient with an electrolyte.

   (La,Sr) (Co,Fe)O₃ ... (2)

### [3.4. Reaction preventing layer]

In the conventional SOFC, YSZ is used for an electrolyte, an Ni-YSZ cermet is used for an anode, and LSCF (La_{0.6}Sr_{0.4}Co_{0.2}Fe_{0.8}O₃) is used for a cathode. In this case, in the case where the YSZ and the LSCF are brought into direct contact with each other, when the YSZ and the LSCF are heated to a high temperature, a high resistance reaction layer (SrZrO₃) is formed at an interface between the YSZ and the LSCF. Accordingly, it is necessary to insert a reaction preventing layer (for example, Ga-CeO₂ or the like) between the YSZ and the LSCF.

On the other hand, even when the melilite electrolyte and the LSCF are brought into direct contact with each other and are heated to a high temperature, there is no possibility that a high resistance reaction layer is formed between the melilite electrolyte and the LSCF.
Accordingly, in the present invention, the reaction preventing layer can be omitted.

### [4. Effect]

A melilite electrolyte containing La and a trivalent metal element (X) has a crystal structure of low symmetry and an anisotropic ion conductivity. In such a melilite electrolyte, when a part of La is substituted with an element M and an La/M ratio is optimized, a conductivity at a low temperature improves. This is presumably because the quantity of oxygen ions (O(4) ions) acting as a carrier in the oxygen ions increases in a crystal structure.

Further, when a part of the element X is substituted with Mg, a conductivity at a low temperature improves further. When a composition is optimized, a conductivity at 600°C becomes more than about ten times (0.02 S/cm) greater than that of a conventional electrolyte (YSZ). The possible reasons are as follows.

That is, whereas the difference in electronegativity between Ga and oxygen is 1.68, the difference in electronegativity between Mg and oxygen is 2.27. When Mg having a difference in electronegativity from oxygen larger than an element X is doped therefore, the ion bonding property of a melilite electrolyte increases.

Further, whereas an element X is trivalent, Mg is divalent. When Mg having a valence smaller than an element X is doped therefore, the quantity of oxygen vacancies increases in a melilite electrolyte.

As a result, oxygen ions acting as a carrier are thought to be in the state of being more likely to move in a lattice by those effects.

By applying such a melilite electrolyte to an electrolyte membrane of a solid oxide fuel cell, an operation temperature of the fuel cell can be lowered. Further, the melilite electrolyte does not contain Zr and hence, there is no possibility that the melilite electrolyte reacts with LSCF and forms a high-resistance reaction layer. Accordingly, it is unnecessary to interpose a reaction preventing layer between the cathode and the electrolyte membrane.

While a thermal expansion coefficient (α) of YSZ is 9.9 × 10⁻⁶ K⁻¹, a thermal expansion coefficient of the melilite electrolyte is 8.6 × 10⁻⁶ K⁻¹ on an "a" axial length, and is 11 × 10⁻⁶ K⁻¹ on a "c" axial length. Accordingly, such a melilite electrolyte can be easily matched to thermal expansion coefficients (for example, LSC: α = 18.4 × 10⁻⁶ K⁻¹, LSCF:13 × 10⁻⁶ K⁻¹) of various cathodes having different compositions.

### [Examples]

### (Examples 1 to 4, Comparative example 1)

### [1. Preparation of sample]

### [1.1. Examples 1 to 4 (melilite electrolyte)]

### [1.1.1. Mixing and calcination of raw materials]

Strontium carbonate, lanthanum oxide, gallium oxide, and magnesium oxide were used as the raw materials. The raw materials were weighed so as to obtain a mixture having the composition of La_{2-y}Sr_{y}Ga_{3-z}Mg_{z}O_{7+α}, (y = 0.7 to 0.46, z = 0 to 0.13). The raw materials were put into a pot of 500 cc containing zirconia balls of 2 mm in diameter and further ethanol of 250 cc was put into the pot. The materials were stirred for 15 hours by a ball mill method, whereby the materials were pulverized and mixed.

After mixing, ethanol distillation and powder dry were applied at 80°C for 15 hours. Successively, the mixture of the balls and the dried powder was sieved (60 meshes) and the mixed powder was separated.

The mixed powder was put into a crucible and calcined at 1,300°C for 15 hours in the atmosphere in a heating furnace. Further, the sample after calcined was sieved (60 meshes). The sieved calcined sample of 10 g and ethanol (250 cc) were put into a pot of 500 cc containing zirconia balls of 2 mm in diameter and pulverized for 15 hours by a ball mill method.

After the pulverization, ethanol distillation and powder dry were applied at 80°C for 15 hours. Successively, the mixture of the balls and the calcined powder was sieved (60 meshes) and the calcined power was separated.

Successively, 5% PVA (polyvinyl alcohol) of 4 g as an additive and ethanol of 4 g as a solvent were added to the calcined powder of 10 g and they were mixed and left at room temperature for 24 hours. Successively, they were dried for 15 hours in a dryer (80°C).

### [1.1.2. Manufacturing of electrolyte membrane (manufacturing of sintered body)]

The additive-added calcined powder of 1.5 g was put into a tablet shaper of 2 cm in diameter and a pellet of 2 cm in diameter was manufactured by hydraulic press (press pressure: 26 kN). The pellet of 2 cm in diameter was reacted at 1,400°C for 50 hours in the atmosphere in a heating furnace and a sintered body of 1.7 cm in diameter (thickness: 1 mm) was obtained.

### [1.2. Comparative example 1 (YSZ)]

A commercially available YSZ (8 mol% Y₂O₃) was used for a test as it is.

### [2. Test method]

### [2.1. Measurement of conductivity]

Platinum electrodes were attached to the top and bottom faces of a sintered body and a conductance between two terminals in the membrane thickness direction was evaluated by using an LCR meter. The measurement was carried out up to the maximum temperature of 800°C under the atmosphere.

### [2.2. Power generation characteristic]

Platinum electrodes were attached to the top and bottom faces of a sintered body. A power generation characteristic at 600°C to 700°C was evaluated using the obtained unit cell. A hydrogen gas was used as a fuel gas, and air was used as an oxidizer gas.

### [2.3. Element analysis]

### [2.3.1. Examples 1 to 4]

La_{0.6}Sr_{0.4}Co_{0.2}Fe_{0.8}O₃ (LSCF) was applied to one surface of the sintered body made of the melilite electrolyte by a screen printing method and, thereafter, the sintered body was baked for one hour at 1,000°C. After baking was performed, an element analysis was performed in the vicinity of an interface between an electrolyte membrane and a cathode using an EDX.

### [2.3.2. Comparative example 1]

A reaction preventing layer (Ga-CeO₂) was applied to one surface of the sintered body made of YSZ by a screen printing method and, thereafter, the sintered body was baked for one hour at 1,230°C. Next, in the same manner as the example 1, LSCF was formed on a surface of the reaction preventing layer. After baking was performed, an element analysis was performed in the vicinity of an interface between an electrolyte membrane and a cathode using an EDX.

### [3. Result]

### [3.1. Conductivity]

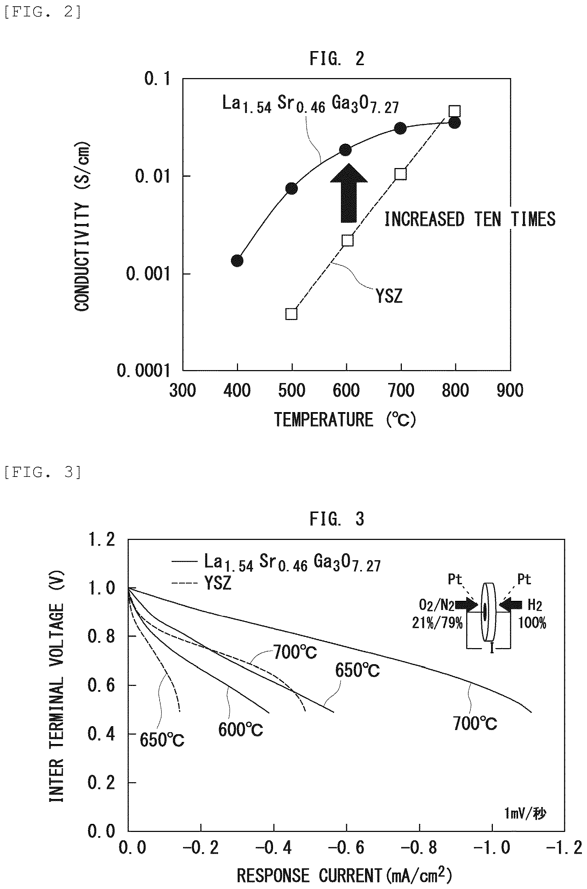

FIG. 2 shows oxygen ion conductivities of a melilite electrolyte (La_{1.54}Sr_{0.46}Ga₃O_{7.27}) and a YSZ. Further, Table 1 shows conductivities of the melilite electrolytes (examples 1 to 4) and the YSZ (comparative example 1).

**[Table 1]**

| | | CONDUCTIVITY (S/cm) | | | | |
|---|---|---|---|---|---|---|
| | | 400°C | 500°C | 600°C | 700°C | 800°C |
| Example 1 | La_{1.54}Sr_{0.46}Ga_{2.57}Mg_{0.13}O_{7.21} | 0.0021 | 0.0086 | 0.0203 | 0.0346 | 0.0431 |
| Example 2 | La_{1.54}Sr_{0.46}Ga₃O_{7.27} | 0.0014 | 0.0077 | 0.019 | 0.0314 | 0.0362 |
| Example 3 | La_{1.35}Sr_{0.65}Ga_{2.96}Mg_{0.04}O_{7.26} | 0.00082 | 0.0034 | 0.01 | 0.0195 | 0.0244 |
| Example 4 | La_{1.33}Sr_{0.67}Ga₃O_{7.1} | 0.00036 | 0.0017 | 0.0034 | 0.0083 | 0.011 |
| Comparative example 1 | YSZ | | 0.0004 | 0.0023 | 0.011 | 0.0467 |

It was confirmed that the melilite electrolyte had higher conductivity than the YSZ, and conductivity of the melilite electrolyte was enhanced by doping a Ga site of the melilite electrolyte with Mg.

For example, when a comparison was performed using equivalent La/Sr ratios, conductivities (600°C) of La_{1.35}Sr_{0.65}Ga_{2.96}Mg_{0.04}O_{7.26} and La_{1.33}Sr_{0.67}Ga₃O_{7.1} were 0.01 S/cm and 0.0034 S/cm respectively, and the conductivities were enhanced by 2.9 times by doping with Mg.

Further, conductivities (600°C) of La_{1.54}Sr_{0.46}Ga_{2.87}Mg_{0.13}O_{7.21} and La_{1.54}Sr_{0.46}Ga₃O_{7.37} were 0.0203 S/cm and 0.019 S/cm respectively, and the conductivities were enhanced by doping with Mg.

On the other hand, the conductivity (600°C) of the YSZ was 0.0023 S/cm.

### [3.2. Power generation characteristic]

FIG. 3 shows a power generation characteristic (an I-V characteristic) of an SOFC using the melilite electrolyte (La_{1.54}Sr_{0.46}Ga₃O_{7.27}) and a power generation characteristic of an SOFC using the YSZ. From FIG. 3, the following are found.
(a) The power generation characteristic at 600°C of the SOFC using melilite was higher than the power generation characteristic at 650°C of the SOFC using the YSZ.
(b) The power generation characteristic at 650°C of the SOFC using melilite was substantially equal to the power generation characteristic at 700°C of the SOFC using the YSZ.
(c) At 700°C, the power generation characteristic of the SOFC using the melilite was enhanced to two times as large as the power generation characteristic of the SOFC using the YSZ.
(d) At 650°C, the power generation characteristic of the SOFC using the melilite was enhanced to three times as large as the power generation characteristic of the SOFC using the YSZ.

### [3.3. Element analysis]

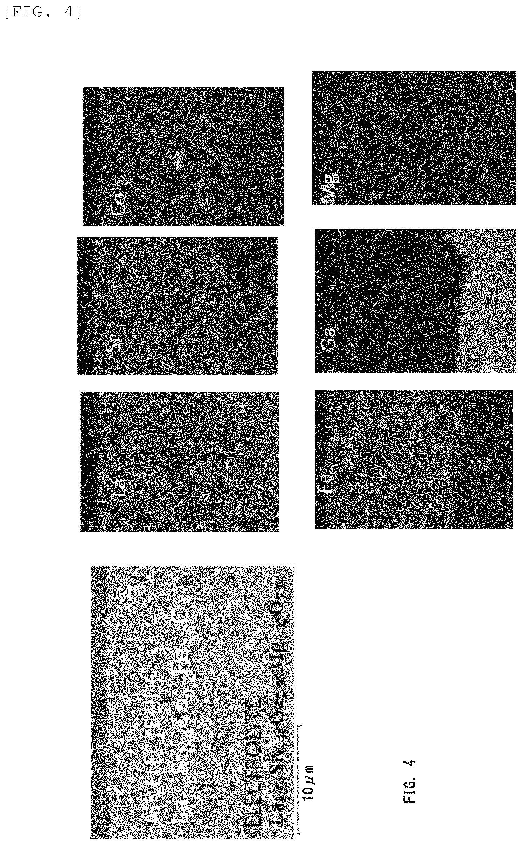

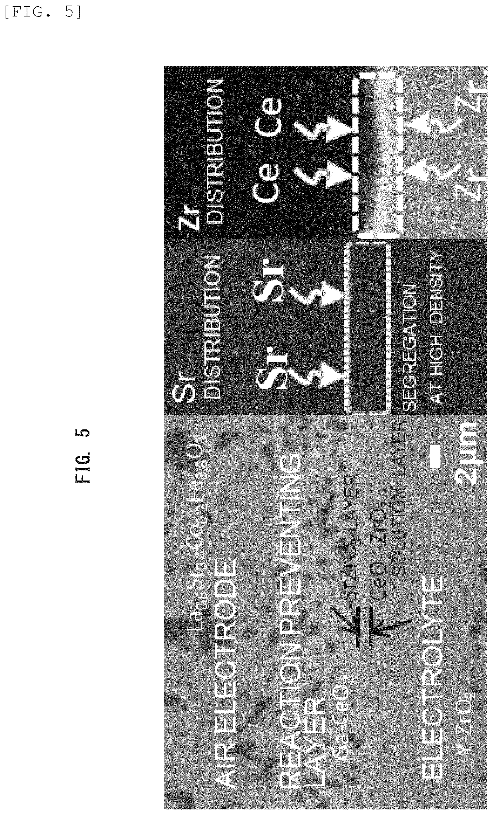

FIG. 4 shows SEM images of a bonding interface between the melilite electrolyte (La_{1.54}Sr_{0.46}Ga_{2.98}Mg_{0.02}O_{7.26}) and the cathode (La_{0.6}Sr_{0.4}Co_{0.2}Fe_{0.8}O₃), and an element analysis result of the bonding interface. FIG. 5 shows SEM images of a bonding interface between an electrolyte (Y-ZrO₂) and a reaction preventing layer (Ga-Ce0₂) and a bonding interface between the reaction preventing layer (Ga-CeO₂) and the cathode (La_{0.6}Sr_{0.4}Co_{0.2}Fe_{0.8}O₃), and an element analysis result of the bonding interface.

When the YSZ is used as the electrolyte membrane, it is indispensable to insert the reaction preventing layer to suppress a reaction between Zr contained in the YSZ and Sr contained in the LSCF. However, also when the reaction preventing layer was inserted, the formation of SrZrO₃ which is a high resistance layer was confirmed on an interface between the electrolyte and the reaction preventing layer (see FIG. 5).

On the other hand, when the melilite electrolyte was used as the electrolyte membrane, it was confirmed that no heterogeneous phase existed in the vicinity of an interface between the cathode and the electrolyte (see FIG. 4).

Although the embodiment of the present invention has been described in detail heretofore, the present invention is not particularly limited to the above-mentioned embodiment, and various modifications are conceivable without departing from the invention as defined in the appended claims.

### [Industrial applicability]

The solid oxide fuel cell according to the present invention can be used for a household cogeneration system, an independent distributed power source, or the like.

## Claims

1. A solid oxide fuel cell comprising:
an electrolyte membrane;
an anode formed on one surface of the electrolyte membrane; and
a cathode formed on the other surface of the electrolyte membrane,
wherein the electrolyte membrane is composed of a melilite electrolyte (A) having a composition expressed by a following formula (1):
La_{2-y}M_{y}X_{3-z}Mg_{z}O_{7+α} (1),
wherein
M is an alkaline earth metal element other than Mg,
X is a trivalent metal element,
0 < y < 2, 0 ≤ z < 3, and
α is a value retaining electrical neutrality,
wherein the anode is composed of an Ni-melilite cermet containing Ni and a melilite electrolyte (B) having a composition equal to or different from a composition of the melilite electrolyte (A),
wherein the cathode is composed of oxide having a composition expressed by a following formula (2):
(La,Sr) (Co,Fe)O₃ (2),
and
wherein the cathode is directly formed on the electrolyte membrane without a reaction preventing layer being interposed between the cathode and the electrolyte membrane.

2. The solid oxide fuel cell according to claim 1, wherein a difference in thermal expansion coefficient between the melilite electrolyte (A) and the melilite electrolyte (B) is 10% or less.

3. The solid oxide fuel cell according to any one of claims 1 to 2, wherein the X is Ga and/or Al.

4. The solid oxide fuel cell according to any one of claims 1 to 3, wherein the solid oxide fuel cell also satisfies a relationship of 1.9 ≤ (2 - y)/y ≤ 4.0 and a relationship of 0 < z ≤ 0.20.

## Patentansprüche

1. Festoxidbrennstoffzelle mit:
einer Elektrolytmembran;
einer Anode, die auf einer Oberfläche der Elektrolytmembran ausgebildet ist; und
einer Kathode, die auf der anderen Oberfläche der Elektrolytmembran ausgebildet ist,
bei der die Elektrolytmembran aus einem Melilith-Elektrolyt (A) mit einer Zusammensetzung, die durch eine folgende Formel (1) ausgedrückt wird, besteht:
La_{2-y}M_{y}X_{3-z}Mg_{z}O_{7+α} (1),
wobei
M ein Erdalkalimetallelement ist, das sich von Mg unterscheidet,
X ein dreiwertiges Mettallelement ist,
0<y<2, 0 ≤ z<3 und
α ein Wert ist, der eine elektrische Neutralität erhält,
bei der die Anode aus einem Ni-Melilith-Cermet mit Ni und einem Melilith-Elektrolyt (B) mit einer Zusammensetzung, die gleich einer Zusammensetzung des Melilith-Elektrolyts (A) oder unterschiedlich dazu ist, besteht,
bei der die Kathode aus einem Oxid mit einer Zusammensetzung, die durch eine Folgende Formel (2) ausgedrückt wird, besteht:
(La, Sr)(Co, Fe)O₃ (2)
und
bei der die Kathode direkt an der Elektrolytmembran ausgebildet ist, ohne dass eine eine Reaktion verhindernde Schicht zwischen der Kathode und der Elektrolytmembran angeordnet ist.

2. Festoxidbrennstoffzelle nach Anspruch 1, bei der ein Unterschied eines thermischen Ausdehnungskoeffizienten zwischen dem Melilith-Elektrolyt (A) und dem Melilith-Elektrolyt (B) 10% oder weniger beträgt.

3. Festoxidbrennstoffzelle nach einem der Ansprüche 1 bis 2, bei der X Ga und/oder Al ist.

4. Festoxidbrennstoffzelle nach einem der Ansprüche 1 bis 3, bei der die Festoxidbrennstoffzelle ferner eine Beziehung 1,9 ≤ (2 - y)/y ≤ 4,0 und eine Beziehung 0 < z ≤ 0,20 erfüllt.

## Revendications

1. Cellule de pile à combustible d'oxyde solide comprenant :
une membrane d'électrolyte ;
une anode formée sur une surface de la membrane d'électrolyte ; et
une cathode formée sur l'autre surface de la membrane d'électrolyte,
dans laquelle la membrane d'électrolyte est composée d'un électrolyte de mélilite (A) ayant une composition exprimée par la formule suivante (1) :
La₂-_{y}M_{y}X₃-_{z}Mg_{z}O₇₊ₐ (1),
dans laquelle
M représente un élément métallique alcalino-terreux autre que Mg,
X représente un élément métallique trivalent,
0 < y <2, 0 ≤ z < 3, et
α est une valeur conservant la neutralité électrique,
dans laquelle l'anode est composée d'un cermet de Ni-mélilite contenant du Ni et d'un électrolyte de mélilite (B) ayant une composition égale ou différente d'une composition de l'électrolyte de mélilite (A),
dans laquelle la cathode est composée d'un oxyde ayant une composition exprimée par la formule suivante (2) :
(La, Sr) (Co, Fe)O₃ (2),
et
dans laquelle la cathode est formée directement sur la membrane d'électrolyte sans qu'une couche empêchant la réaction soit interposée entre la cathode et la membrane d'électrolyte.

2. Cellule de pile à combustible d'oxyde solide selon la revendication 1, dans laquelle une différence de coefficient de dilatation thermique entre l'électrolyte de mélilite (A) et l'électrolyte de mélilite (B) est de 10% ou moins.

3. Cellule de pile à combustible d'oxyde solide selon l'une quelconque des revendications 1 à 2, dans laquelle le X représente Ga et/ou AI.

4. Cellule de pile à combustible d'oxyde solide selon l'une quelconque des revendications 1 à 3, dans laquelle la cellule de pile à combustible d'oxyde solide satisfait également une relation de 1,9 ≤ (2 - y)/y ≤ 4,0 et une relation de 0 < z ≤ 0,20.
